# EUROPEAN PATENT SPECIFICATION

(11) **EP 3 170 727 B1**
(45) Date of publication and mention of the grant of the patent: **20.06.2018**
(21) Application number: 16199452.0
(22) Date of filing: 18.11.2016
(51) Int. Cl.: B62K 21/16

(54) **ASSEMBLY OF A BICYCLE STEM AND ONE OR MORE CLAMPING ORGANS**
ANORDNUNG EINES FAHRRADVORBAUS UND EINER ODER MEHRERER KLEMMTEILE
ASSEMBLAGE D'UNE POTENCE DE BICYCLETTE ET UN OU PLUSIEURS ORGANES DE SERRAGE

(30) Priority: 20.11.2015 NL 2015830
(43) Date of publication of application: 24.05.2017
(73) Proprietor: Just Ride B.V., 1011 TB Amsterdam (NL)
(72) Inventor: VROOMEN, Gerard Louis Jean Paul Amaury, 1011 TB AMSTERDAM (NL)
(74) Representative: EP&C

(56) References cited:
- WO-A1-2010/018471
- WO-A1-2010/105893
- CN-A- 102 190 049
- CN-A- 103 213 640
- CN-A- 103 661 740
- DE-U1- 9 401 070
- GB-A- 2 467 544
- TW-A- 201 202 086
- US-A- 5 373 757
- US-A- 5 477 747

## Description

The invention relates to the field of bicycle stems that can be clamped by means of clamping organs to steerer tubes of bicycles.

Such bicycle stems are known in a wide variety of embodiments. For example US 2002/0166406 discloses a bicycle stem having a stem body that at one end is provided with a two part clamp for having a handlebar connected thereto. At its other end the stem body comprises a cylindrical clamping opening through which an upper end of a cylindrical steerer tube can project. A wedge cavity is provided adjacent the cylindrical clamping opening. A wedge member can be placed from below into this cavity such that it comes to lie with a convexly curved inner clamping face against the steerer tube and with an angled clamping face slideable along a wall of the cavity. A bolt is provided with which the wedge member can be pulled tighter into the cavity while at a same time getting to exert an increasing clamping force onto the steerer tube.

A disadvantage with this known bicycle stem is that it is necessary to manufacture different lengths of the stem body, for example in steps of 10mm, such that an interspacing between the steerer tube and the handlebar can be tuned to user's wishes. However to offer a full range of lengths for people of varying size with 10mm steps, 6-8 lengths of stem bodies would be needed and hence many manufacturing moulds are necessary. This is expensive and laborious. At present this is even worsened because a trend in the market is that a higher degree of fine-tuning for the positioning of the handlebar with respect to the steerer tube is required. For example smaller steps of 5.0mm or 2.5mm are desired for the different lengths of stem bodies. This however is considered to be too expensive because it would require no less than 24-32 different stem lengths.

Another example of a known bicycle stem is shown in US 2007/0241531 which discloses an angularly adjustable stem body with which the orientation of the handlebar can be changed relative to the steerer tube. Thus the handlebar can be lowered or raised and at a same time moved somewhat closer to or further from the steerer tube. For this the stem body is provided with a teardrop-shaped clamping opening inside which an upper end of a steerer tube can be inserted. A clamping organ can be placed inside a more slender portion. The clamping organ comprises a wedge with an inner clamping face that lies against the steerer tube and two tapered surfaces at its opposite side. The wedge is disposed between two clamp members that together define an outer clamping face that lies against the second portion of the clamping opening. When the clamping organ is placed, then the clamping organ and the rest of the clamping opening together define an aperture that is generally cylindrically shaped, similar to the steerer tube. The inner and outer clamping faces are angled relative to each other. Furthermore a complementary angled shim is provided that can be placed between the clamping opening and the steerer tube at a position opposite the clamping organ. In a first orientation the angled clamping faces and angled shim together force the stem body to take in an angle relative to the steerer tube that is larger than 90 degrees. When placed upside down in a second orientation, the angled clamping faces and angled shim together force the stem body to take in an angle relative to the steerer tube that is smaller than 90 degrees. Thus the angle of the stem body can be changed by placing the clamping organ and shim either in the first or second orientation.

A disadvantage with this known bicycle stem is that the angular adjustment not materially changes the distance between the handlebar and the steerer tube, only as a minor and unintended side-effect of the angle change. Furthermore it is then disadvantageous that this length adjustment inevitably needs to go together with an angle-adjustment, which may not be desired or even disadvantageous in some circumstances for some users. Also this angle-adjustment then immediately would necessitate a counter angle-adjustment between the handlebar and the stem body. If however the stem body and handlebar would be made integral with each other, which may be desired for reasons of aerodynamics, simplicity, manufacturability or visual appeal, then such a counter angle-adjustment between the handlebar and the stem body would not be possible at all. Owing to those disadvantages it still seems necessary for the stem construction according to US 2007/0241531 to manufacture large numbers of different lengths of the stem body, which is expensive and laborious.

US 8,177,249 shows another example of an angularly adjustable stem body with which the orientation of the handlebar can be changed relative to the steerer tube. For this a clamping construction is provided which puts suitably toothed profiled shims around an upright upper end of the steerer tube in such a way that it transfers the outside shape of the upright upper end into a horizontal bar stump. This horizontal bar stump is then clamped inside a clamping opening of the stem body by two wedges that can be pulled towards each other in the horizontal direction. Preceding clamping, the stem body can be rotated stepwise around the horizontal bar stump while the wedges ratchet along the toothed profiles. Thus an angle-adjustment can be created for the stem.

A disadvantage here is that the clamping axis is perpendicular to the steerer tube axis, which requires a complex and vulnerable transition of upright and horizontal sections of the clamping opening. Also it brings along a pinching risk for the steerer tube, as the clamping forces end up acting quite locally around the edges of the wedges. This is not a big problem for metal bar steerer tubes, but for high performance carbon steerer tubes, this pinching may damage the carbon and entail a risk for injury. Another disadvantage is that the rather complex clamping mechanism is difficult and expensive to manufacture and also makes it impossible for the steerer tube to be moved fore-aft inside the clamping opening to change the stem length.

It is noted that the stem length in US 8,177,249 can be adjusted in two steps at the side of its connection with the handlebar. For this the stem body comprises a horizontal semi-cylindrical recess over which a U-shaped cap can be placed. Together the recess and the cap define an opening for the handlebar to extend through. Two crescent-shaped spacers can be placed either in the U-shaped cap either in the recess for obtaining a reduced or increased stem length. The U-shaped cap at its upper side is hingedly connected to the stem body. At its lower side the U-shaped cap can be pulled towards the stem body by means of tightenable bolts. Thus the handlebar can be forcedly clamped to the stem body at two different interspacings from the steerer tube.

A disadvantage here is that this length-adjustment option only offers two different length options for the stem. Owing to this it still seems necessary for the stem construction according to US 8,177,249 to manufacture large numbers of different lengths of the stem body, which is expensive and laborious. Also it is noted this length-adjustment option stands in the way of making the handlebar integral with the stem body for reasons of aerodynamics, simplicity, manufacturability or visual appeal.

GB 2467544, on which the preamble of claim 1 is based, WO 2010/018471, DE 94 01 070 U1, US 5,373,757 and US 5,477,747 relate to angle-adjustment clamping mechanisms between a stem body and a steerer tube.

TW 201202086, CN 103661740, CN 103213640, WO 2010/105893 and CN 102190049 relate to clamping mechanisms between a stem body and handlebars.

The present invention aims to overcome the above-mentioned disadvantages at least partly or to provide a usable alternative. In particular the present invention aims to provide a user-friendly and efficient assembly of a bicycle stem and one or more clamping organs that offers flexibility for easily adjusting the length of the stem.

This aim is achieved by the assembly of a bicycle stem and a clamping organ according to claim 1. The assembly comprises a stem body for extending in a longitudinal direction between a steerer tube and a handlebar. A clamping opening is present in an end part of the stem body, which clamping opening is designed for having an upper end of the steerer tube placed therein in an insertion direction. An operable clamping organ is provided for clamping the steerer tube inside the clamping opening. The clamping organ has at least one operable insert part that is destined to lie with an inner clamping face against the steerer tube and with an outer clamping face against the clamping opening and that is tightenable for exerting a clamping force between the clamping opening and the steerer tube for fixedly connecting the stem body to the steerer tube. The clamping opening is dimensioned for having the upper end of the steerer tube and the at least one insert part of the clamping organ fit inside it behind each other in said longitudinal direction. According to the inventive thought the clamping opening has symmetric opposing end sections, wherein both the opposing end sections of the clamping opening as well as the inner and outer clamping faces of the at least one insert part of the clamping organ are shaped complementary to outer circumferential parts of the upper end of the steerer tube, such that the at least one insert part of the clamping organ is positionable in two different rotational positions on either side of the steerer tube inside the clamping opening for adjusting a distance between the steerer tube and the handlebar.

Thus the invention advantageously makes use of a suitable oblong symmetric shaping of the clamping opening in combination with a combined clamping and length-adjustment function for the clamping organ with its one or more complementary shaped insert parts. The one or more insert parts of the clamping organ is/are not only destined for a clamping of the steerer tube inside the clamping opening of the stem body but at a same time is/are also destined for being able to easily and quickly adjust the stem length. This double function makes it possible to make the construction simple, with a limited number of components, compact and light-weight. The oblong shaped clamping opening with its symmetric suitably shaped end sections makes a fore-aft movement of the steerer tube inside the clamping opening well possible. Owing to the complementary shapes, the one or more insert parts may be positioned directly against either one or both of the end sections. Likewise the steerer tube may be positioned directly against either one of the end sections and against the insert part, or if desired even in between two of the complementary shaped insert parts. All this offers a lot of flexibility to the user for effectively changing the length of the stem in various manners and/or relative small steps, while for all length-adjustment positions being able to guarantee a reliable clamping of the steerer tube.

The clamping organ preferably may have this insertion direction for its insert part(s) into the clamping opening extend in a same direction as the insertion direction for the upper end of the steerer tube, which in turn is parallel to a central rotation axis of the steerer tube. This common insertion direction makes it possible for the inner clamping face(s) of the insert part(s) to lie against a large part of the steerer tube and spread the clamping force such that a pinching risk is minimized which is important for clamping of more vulnerable steerer tubes like ones made out of carbon.

In a particular embodiment one of the clamping organs is of a first type in which it comprises only one insert part that is dimensioned to substantially fill up one of the end sections of the clamping opening adjacent the upper end of the steerer tube in a clamping position. Owing to the complementary shapes, the one insert part then may be positioned directly with its outer clamping face against one of the end sections, whereas the steerer tube then may be positioned directly against the other one of the end sections and against the inner clamping face of the insert part. Depending on a rotational position of the clamping organ an increased or decreased stem length can thus be obtained.

In a variant at least one of the clamping organs is of a second type in which it comprises a first and second insert part that lie interspaced from each other such that the upper end of the steerer tube fits in between them, wherein the first and second insert parts are both destined to lie with an inner clamping face against the steerer tube and with an outer clamping face against one of the end sections of the clamping opening, and wherein the first and second insert parts are dimensioned to substantially fill up different sizes of the end sections of the clamping opening adjacent the upper end of the steerer tube in a clamping position. Owing to the complementary shapes, the two insert parts then may be positioned directly with their outer clamping faces against the two end sections, whereas the steerer tube then may be positioned directly in between them while lying against the inner clamping faces of the two insert parts. Because the first and second insert parts have different widths in the longitudinal direction, now also an increased or decreased stem length can be obtained depending on a rotational position of the clamping organ. For this second type of clamping organ it is noted that at least one of the two insert parts is tightenable for exerting a clamping force, but that also both of them may be of the operable type such that an even higher total clamping force can be obtained.

In a further variant at least one of the clamping organs is of a third type in which it may comprise more than two insert parts, and that are dimensioned to together with the upper end of the steerer tube substantially fill up the clamping opening in a clamping position. Those multiple insert parts then each have been equipped with inner and outer clamping faces that are shaped complementary to the outer circumferential parts of the steerer tube such that the insert parts are positionable inside the clamping opening in various positions relative to this steerer tube and end sections of the clamping opening. Owing to the complementary shapes, the multiple insert parts then may all be positioned after each other in merely one end section at one same side of the steerer tube, or can get suitably distributed over both end sections with the steerer tube lying in between them. For this it is necessary that none or at least not all of the insert parts are fixedly connected to each other. The multiple insert parts then may have same or different widths in the longitudinal direction, such that all kinds of combinations can be made which result in increased or decreased stem lengths depending on the distribution of the insert parts over the respective end sections of the clamping opening. For this third type of clamping organ it is noted that at least one of the insert parts is tightenable for exerting a clamping force, but that also more than one of them may be of the operable type such that an even higher total clamping force can be obtained. In particular the third type clamping organ may comprise three insert parts of stepped increasing widths, for example 2.5, 5 and 10 mm. All of them can then be put at one side of the steerer tube, or only the 2.5 mm, or only the 5 mm, or the 2.5 and 5 mm together, etc.

In a preferred embodiment the assembly can comprise a number of different second and/or third type clamping organs in order to be able to obtain more than two length-adjustment options for the stem. For this the different second and/or third type clamping organs each may have a unique combination of width ratios for their respective insert parts for substantially filling up lesser or larger amounts of the respective end sections of the clamping opening adjacent the upper end of the steerer tube in the clamping position.

In a further preferred embodiment the assembly may even comprise a combination of one first type clamping organ and one or more different second and/or third type clamping organs. With the first type of clamping organ then a maximum and minimum stem length can be obtained depending on the rotational insertion position cq side of the steerer tube where the insert parts are positioned. With the second and/or third type clamping organs then as many fine length-adjustments as desired can be obtained in between those maximum and minimum values, depending on their specific width ratios and relative positions.

The operable clamping organs may be of various types as long as they are able to adjust the stem length while also exerting sufficiently strong clamping forces to an inserted steerer tube. Besides the inner and outer clamping faces being shaped complementary to the outer circumferential parts of the steerer tube such that they are positionable inside the clamping opening in various positions, it is in particular preferred to have one or both of the inner and outer clamping faces at a same time be made wedge-shaped in the insertion direction such that increasing clamping forces get exerted between the steerer tube and the clamping opening when the one or more insert parts get pushed or pulled further in an insertion direction into the clamping opening.

Preferably the insert part(s) comprises two or more wedge segments that are movable in the insertion direction with two or more slanted guiding faces along each other while at a same time getting forced by the interaction of those slanted guiding faces to move inward in the longitudinal direction towards the steerer tube. A tightening element then is provided for pulling the two or more wedge segments in the insertion direction along each other towards a clamping position in which the required clamping forces get exerted onto the steerer tube. This wedge type of clamping has proven to be more than able to reliably clamp the steerer tube, can be kept compact, and is suitable for being placed in between the steerer tube and the end section(s) in two rotational positions.

For the second and/or third type of clamping organ it is noted that the insert parts can be distinctive components that are not connected to each other or that are releasably connected to each other, for example by means of magnetic forces, or that are only held together by means of the clamping force after having been placed together with the steerer tube inside the clamping opening. Preferably however for the second type of clamping organ, a connection is provided between its first and second insert parts such that their interspacing is guaranteed and such that they can be placed in one go in the clamping opening. In a further variant the clamping organ may comprise an upper wall that in the case of the first type clamping organ connects to the one insert part, and that in the case of the second type clamping organ connects to both the first and second insert parts, and that covers at least part of an upper side of the clamping opening while resting with a circumferential edge upon the stem body. The upper wall then may comprise an opening for the upper end of the steerer tube to project through or may substantially cover the upper end of the steerer tube. In the first case it may form an additional support for the steerer tube. In the second case it may help to prevent dirt and the like to enter the clamping opening and cover possibly sharp-edged components of the assembly.

The upper end of the steerer tube may have various cross-sectional shapes as long as they are mirror symmetrical relative to a horizontal axis that lies perpendicular to the longitudinal direction. Preferably the upper end of the steerer tube may have a cylindrical cross section, wherein the inner and outer clamping faces of the at least one insert part of the clamping organ are semi-cylindrical, and wherein the clamping opening has an oblong race track shape with two semi-cylindrical end sections with straight sections extending therebetween. This offers form-stability and conforms to most present steerer tube cross-sectional shapes. Other cross-sectional shapes like ovals or even rectangulars are however also possible for the upper end of the steerer tube.

Further preferred embodiments are stated in the subclaims.

The invention also relates to a bicycle equipped with the assembly of stem and clamping organ.

The invention shall be explained in more detail below with reference to the accompanying drawings, in which:
- Fig. 1a, b show perspective left and right side views of a stem body according to the invention;
- Fig. 2, 2' shows a perspective view of a first type clamping organ according to the invention;
- Fig. 3 shows top, horizontal cross-sectional, side and vertical cross-sectional views of an assembly of the stem body of fig. 1 and the first type clamping organ of fig. 2 in a first rotational position;
- Fig. 4 shows the assembly of fig. 3 with the first type clamping organ in a second rotational position;
- Fig. 5, 5' shows a perspective view of a second type clamping organ according to the invention;
- Fig. 6 shows top, horizontal cross-sectional, side and vertical cross-sectional views of an assembly of the stem body of fig. 1 and the second type clamping organ of fig. 5 in a first rotational position;
- Fig. 7 shows the assembly of fig. 6 with the second type clamping organ in a second rotational position;
- Fig. 8, 8' and 9, 9' show variants of the first and second type clamping organs of fig. 2 and 5;
- Fig. 10a-d and 11a-d show variants of the first and second type clamping organs with distinctive top cap and first and second type sets of insert parts in top and bottom perspective view in four different configurations;
- Fig. 12 shows a partial view of an assembly of a stem body, a clamping organ and a steerer tube with a set screw bolt; and
- Fig. 13 shows a partial view according to fig. 12 with flattened steerer tube, clamping organ and clamping opening end sections.

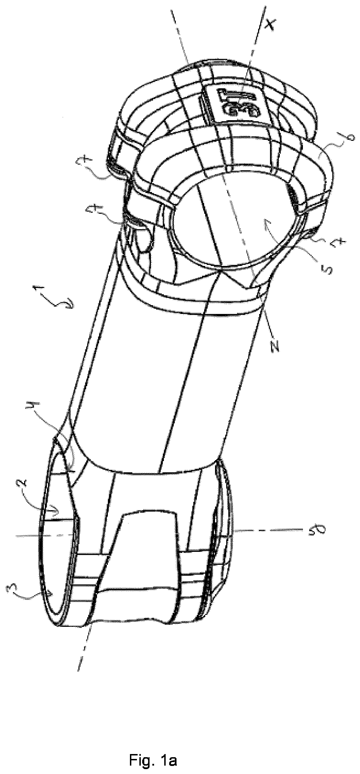

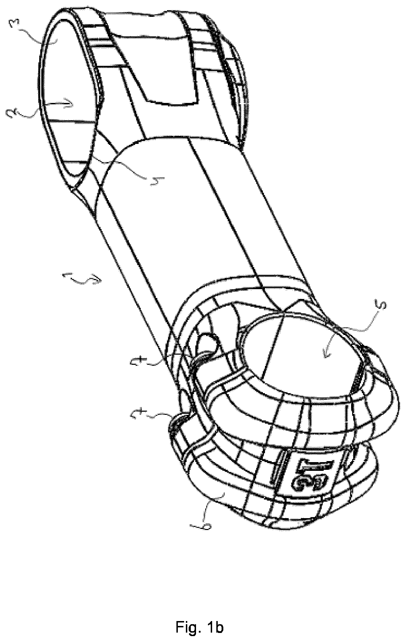

In fig. 1 the stem body has been given the reference numeral 1. The stem body 1 has a longitudinal direction x. In an end part of the stem body 1 an oblong race-track shaped (seen from above) clamping opening 2 is provided that extends over the entire height of the stem body 1. The clamping opening 2 has a central axis y that extends substantially vertically in a so-called insertion direction. The clamping opening 2 is delimited by two semi-cylindrical shaped end sections 3, 4 that are connected to each other by straight wall parts.

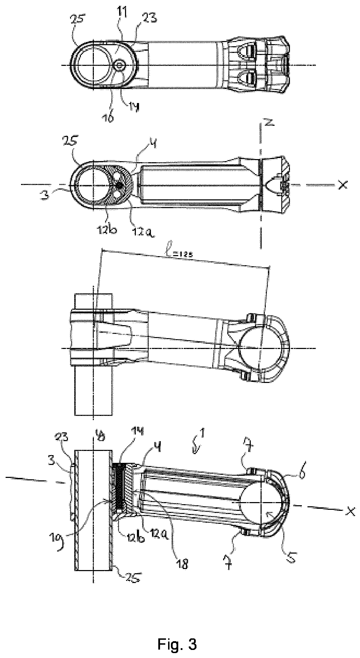

At its other end part the stem body 1 has a cylindrical recess 5 that has a central axis z that extends substantially horizontally and that is perpendicular to both the x- and y-directions. The cylindrical recess 5 comprises a semi-cylindrical recess part in the free end of the stem body 1 and a semi-cylindrical recess part in a capping element 6 that can be tightened onto the free end of the stem body 1 by means of bolts 7 (see fig. 3). The recess 3 is destined to take up a centre section of a handlebar (not shown) that subsequently can be clamped therein by means of a tightening of the bolts 7.

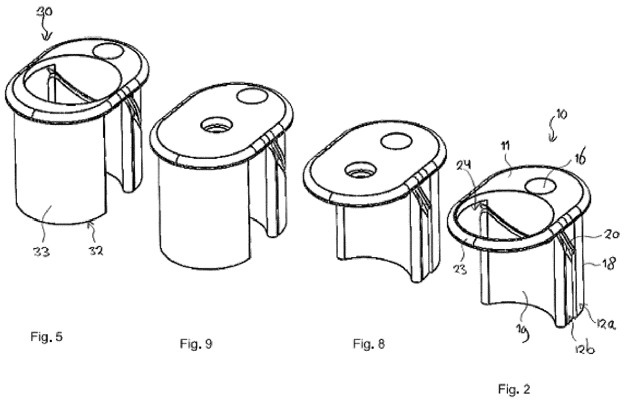

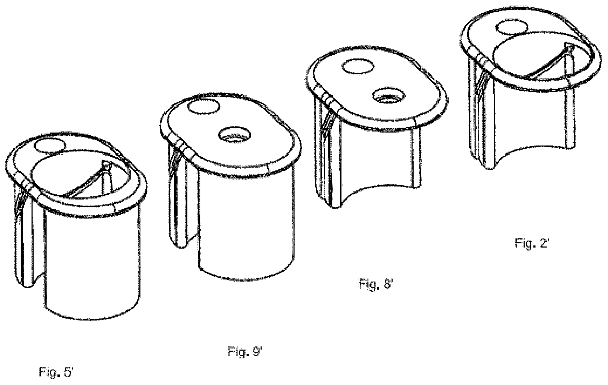

In fig. 2 a first type clamping organ 10 is shown that comprises an upper wall 11 with a downwardly extending insert part 12. The insert part 12 comprises two cooperating wedge segments, that is to say an upper wedge segment 12a that is fixedly connected to a lower side of the wall 11, and a lower wedge segment 12b that is movably connected to the upper wedge segment 12 a by means of a threaded tightening element 14 (see fig. 3), here a bolt that extends freely through a hole 16 in the upper wedge segment 12a and that grips into a female threaded opening 17 provided in the lower wedge segment 12b. The upper wedge segment 12a has a semi-cylindrical shaped outer clamping face 18, whereas the lower wedge segment 12b has a semi-cylindrical shaped inner clamping face 19. Furthermore the wedge-shaped segments 12a, 12b have wedge faces 20 that extend slanted relative to the insertion direction y, in particular under an angle α of between 10-80 degrees, and that are slidable along each other when the tightening element 14 starts exerting a tightening force in the insertion direction y while forcing the wedge segments 12a, 12b to move away from each other in a direction perpendicular to the insertion direction y.

The upper wall 11 is dimensioned larger than the clamping opening 2 such that it is able to rest with a circumferential edge 23 upon an upper side of the stem body 1. The upper wall 11 furthermore comprises an eccentrically positioned cylindrical opening 24 for an upper end of a cylindrical shaped steerer tube 25 to project through (see fig. 3).

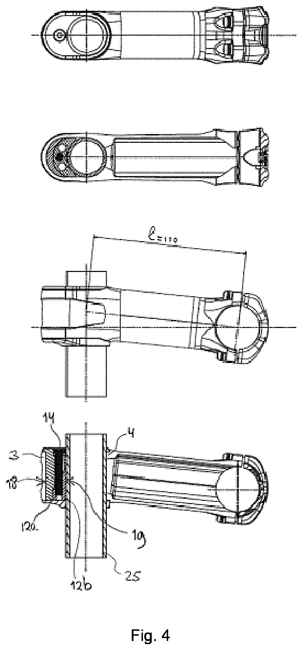

The clamping organ 10 can be inserted in a first rotational position (fig. 3) into the clamping opening 2 such that the outer clamping face 18 comes to lie against the end section 4 and the upper wall 11 comes to rest with its circumferential edge 23 upon the stem body 1. The clamping organ 10 can also be inserted in a second rotational position (fig. 4) into the clamping opening 2 such that the outer clamping face 18 comes to lie against the end section 3. In both rotational positions a cylindrical portion of the clamping opening 2 remains free between the inner clamping face 19 and one of the end sections 3, 4. The upper end of the steerer tube 25 is to be inserted into this cylindrical portion of the clamping opening 2. By subsequently tightening the element 14, the wedge segments 12a, 12b can be forced to move towards each other and start exerting a clamping force onto the steerer tube 25.

As can be seen in the first rotational position of fig. 3 a stem length I is obtained that is longer than in the second rotational position of fig. 4. If for example the width of the insert part 12 is 15mm, then the stem length in the first rotational position (fig. 3) is 125mm, whereas the stem length in the second rotational position (fig. 4) is 110mm. A difference in length of 15mm.

In fig. 5 a second type clamping organ 30 is shown, of which similar parts are given the same reference numerals as for the first type clamping organ 10. It still comprises the upper wall 11 and the downwardly extending first insert part 12 with its two cooperating wedge segments 12a, 12b. It now also comprises a second insert part 32 that lies interspaced from the first insert part 10 over the diameter D of the steerer tube 25. The second insert part 32 is fixedly connected to the lower side of the upper wall 11, has a semi-cylindrical shaped outer clamping face 33 and a semi-cylindrical shaped inner clamping face 34. The second insert part 32 is formed by a non-operable one-piece shim that merely has the purpose of filling up one of the end sections 3, 4 of the clamping opening 2. Between the two inner clamping faces 19 and 34, a cylindrical recess remains free for the upper end of the steerer tube 25 to be inserted into.

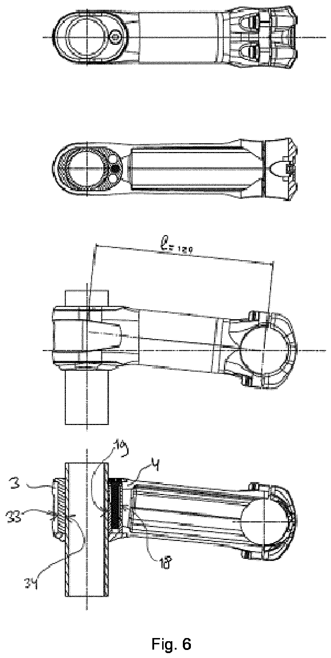

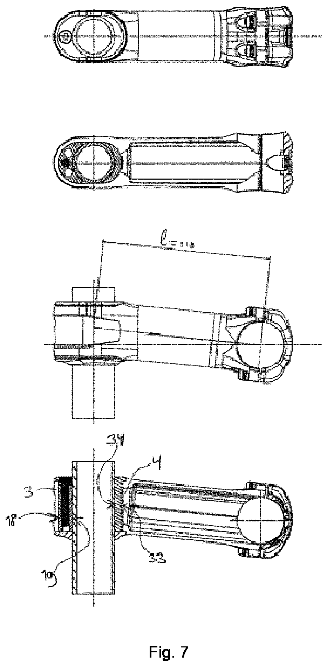

The clamping organ 30 can be inserted in a first rotational position (fig. 6) into the clamping opening 2 such that the outer clamping face 18 comes to lie against the end section 4 and the outer clamping face 33 comes to lie against the end section 3, while the upper wall 11 comes to rest with its circumferential edge 23 upon the stem body 1. The clamping organ 30 can also be inserted in a second rotational position (fig. 7) into the clamping opening 2 such that the outer clamping face 18 comes to lie against the end section 3 and the outer clamping face 33 comes to lie against the end section 4. In both rotational positions the upper end of the steerer tube 25 can be placed in between the two insert parts 12 and 32. By subsequently tightening the element 14, the wedge segments 12a, 12b can be forced to move towards each other and start exerting a clamping force onto the steerer tube 25.

In the first rotational position of fig. 6 a stem length I is obtained that is longer than in the second rotational position of fig. 7. If for example the width w1 of the first insert part 12 is 5mm and the width w2 of the second insert part 32 is 10mm, then the stem length in the first rotational position (fig. 6) is 120mm, whereas the stem length in the second rotational position (fig. 7) is 115mm. A difference in length of 5mm.

Thus owing to the invention it is possible to make four small length-adjustment steps of merely 5mm by making use of merely two different types of clamping organs 10, 30 that each can be placed in two rotational positions into the oblong shaped clamping opening 2. If even smaller and/or other length-adjustment steps are deemed desirable, then this can easily be obtained by providing further second type clamping organs that are designed with different width ratios between their first and second insert parts. For example two additional second type clamping organs can be provided, one of which its first insert part is made with a width of 12.5mm whereas its second insert part is made with a width of 2.5mm, and one of which both its first and second insert parts are made with a width of 7.5mm. Of course in the last case there shall be no difference between the two rotational positions, the upper end of the steerer tube then shall be kept centred in the clamping opening. Thus by addition of two extra second type clamping organs to the assembly, length-adjustment steps of 2.5mm can even be made.

In fig. 8 and 9 a variant is shown in which the upper wall 11 of the insert elements 10, 30 no longer has a cylindrical opening, but now forms a substantially closed upper wall that is designed to substantially cover the upper end of a steerer tube that is short enough for this. The upper end of the steerer tube then in the inserted and subsequently clamped position can come to lie abutting against a lower side of the upper wall 11.

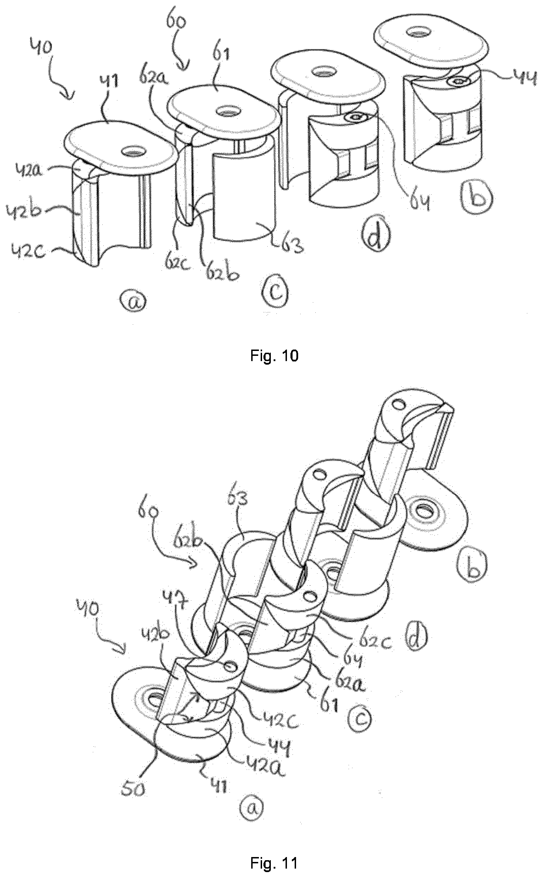

In fig. 10a-b a variant is shown in which the clamping organ 40 is of a first type and comprises a subassembly of a distinctive top cap 41 and a "clamp" insert part 42. This subassembly can be used in combination with for example the stem body 1 of fig. 1. The top cap 40 here is shaped substantially complementary to the clamping opening 2 of the stem body 1, that is to say with an oblong race-track shape that is designed to largely cover the clamping opening 2 in a mounted position.

The insert part 42 comprises three cooperating wedge segments 42a-c, that is to say an upper wedge segment 42a, an intermediate wedge segment 42b and a lower wedge segment 42c that are movably connected to each other by means of a threaded tightening element 44, here a bolt, that extends freely through a hole in the upper wedge segment 42a and that grips into a female threaded opening 47 provided in the lower wedge segment 42c. The upper and lower wedge segment 42a, 42c have semi-cylindrical shaped outer clamping faces, whereas the intermediate wedge segment 42b has a semi-cylindrical shaped inner clamping face. Furthermore the wedge-shaped segments 42a-c have wedge faces 50 that extend slanted relative to the insertion direction y, in particular under an angle α of between 10-80 degrees, and that are slidable along each other when the tightening element 44 starts exerting a tightening force in the insertion direction y while forcing the upper and lower wedge segments 42a, 42c to move away from the intermediate wedge segment 42b in the direction x perpendicular to the insertion direction y.

The subassembly of top cap 41 and insert part 42 can be inserted in a first rotational position (fig. 10a) into the clamping opening 2 and can also be inserted in a second rotational position (fig. 10b) into the clamping opening 2. In both rotational positions a cylindrical portion of the clamping opening 2 then remains free between the inner clamping face and one of the end sections 3, 4 into which an upper end of a steerer tube 25 can be inserted, after which the element 44 can be tightened for having the wedge segments 42a-c exert a clamping force between the stem body 1 and the steerer tube 25.

In fig. 10c-d a variant is shown in which a clamping organ 60 of a second type comprises a subassembly of a distinctive top cap 61 and a set of a first "clamp" insert part 62 and a second "spacer" insert part 63. This subassembly can also be used in combination with for example the stem body 1 of fig. 1.

The first insert part 62 is provided with cooperating wedge segments 62a-c that are similar to the ones of the insert part 42. It is noted though that the thickness of the first insert part 62 is reduced compared to the one of the insert part 42. The second insert part 63 can be positioned interspaced from the first insert part 62 over a diameter D of a steerer tube 25 inside the clamping opening 2 of the stem body 1. The second insert part 63 has a semi-cylindrical shaped outer clamping face and a semi-cylindrical shaped inner clamping face. The second insert part 63 is formed by a non-operable one-piece shim that merely has the purpose of filling up one of the end sections 3, 4 of the clamping opening 2. For this the thicknesses of the first and second insert parts 62, 63 are chosen such that when added together they are substantially equal to the thickness of the insert part 42. Thus, between the opposing interspaced inner clamping faces of the insert parts 62, 63 a cylindrical recess remains free that is complementary to the upper end of the steerer tube 25 to be inserted therebetween.

The subassembly of top cap 61 and set of first and second insert parts 62, 63 can be inserted in a first rotational position (fig. 10c) into the clamping opening 2 such that the opposing interspaced outer clamping faces come to lie against the respective end sections 3, 4 thereof, while the top cap 61 can be positioned in a first rotational position to come to rest upon the stem body 1. The set of insert parts 62, 63 can also be inserted in a second rotational position (fig. 10d) into the clamping opening 2 such that the respective opposing interspaced outer clamping faces then come to lie against the respective end sections 4, 3 thereof, while the top cap 61 can be positioned in a second rotational position to come to rest upon the stem body 1. In both rotational positions the upper end of the steerer tube 25 can be placed in between the insert parts 62, 63. By subsequently tightening a tightening element 64 that extends through the wedge segments 62a-c, the wedge segments 62a-c can be forced to move such that they start exerting a clamping force onto a steerer tube 25 that has also been inserted into the clamping opening 2 of the stem body 1.

Thus in those fig. 10-11 embodiments of the clamping organs 40, 60 the "clamp" and/or "spacer" insert parts 42, 62, 63 are not integrated with the top caps 41, 61. It is noted though that it is also possible to have one or more of the "clamp" and/or "spacer" insert parts 42, 62, 63 be fixedly connected to or integrally manufactured with their top cap 41, 61.

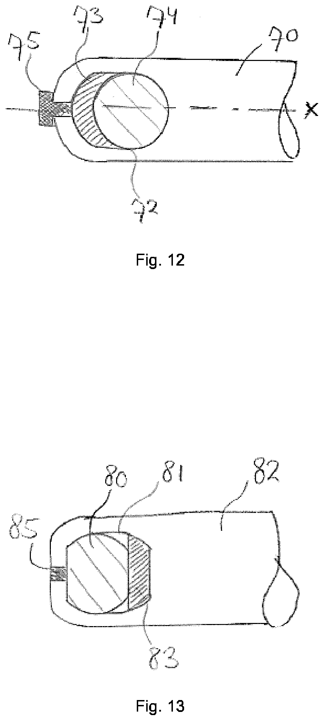

Fig. 12 shows an assembly of a stem body 70 (only a left part thereof is shown) with an oblong race-track shaped clamping opening 72 therein. Inside the opening 72 a clamping organ 73 and a steerer tube 74 are placed. The clamping organ 73 here comprises an insert part that has a semi-cylindrical shaped outer clamping face and a semi-cylindrical shaped inner clamping face, and is formed by a non-operable one-piece shim that is designed to fill up one of the end sections of the clamping opening 72. The clamping organ 73 further comprises a set screw bolt 75 that extends through the stem body 70 in the clamping direction x. A tightening of the screw bolt 75 then causes the insert part to start exerting a clamping force between the stem body 70 and the steerer tube 74. Like in the other shown embodiments, the clamping organ 73 can be placed in two rotational positions inside the opening 72 such that the length between the steerer tube 74 and a handlebar (not shown) at the other end of the stem body 70 can be varied. In a similar manner it is also possible for this variant to provide the clamping organ 73 with interspaced opposing first and second insert parts of which at least one can be pushed towards a clamping position by means of the shown set screw bolt 75.

Besides the steerer tube having a circular cross-section it is also possible to use the invention in combination with other shapes of steerer tubes, including cross sectional shapes with one or more sets of opposing linear or non-round sides, square, rectangular, hexagonal shapes, etc.

For example fig. 13 shows a variant in which a steerer tube 80 has flattened opposing side walls that are complementary to flattened end sections of a clamping opening 81 of a stem body 82 as well as complementary to flattened inner and outer clamping faces of an insert part 83 of a clamping organ. The insert part 83 here also is of a "spacer" type and a set screw bolt 85 is provided to have the insert part 83 start exerting a clamping force on the steerer tube 80. According to the inventive thought the clamping opening 81 has symmetric opposing end sections, and both those opposing end sections as well as the inner and outer clamping faces of the insert part 83 are shaped complementary to outer circumferential parts of the upper end of the steerer tube 80, such that the insert part 83 is positionable in two different rotational positions on either side of the steerer tube 80 inside the clamping opening 81 for adjusting a distance between the steerer tube 80 and a handlebar (not shown) at the other end of the stem body 82. As can be seen the steerer tube 80 and the insert part 83 together do not fill up the entire cross section of the clamping opening 81. Important is that in the inserted mounting position at least part of the outer clamping face of the insert part 83 mates with/abuts against at least part of the inner wall of one of the end sections of the clamping opening 81, and that in this inserted mounting position at least part of the inner clamping face of the insert part 83 mates with/abuts against at least part of the outer wall of the steerer tube 80, and that in this inserted mounting position at least part of the outer wall of the steerer tube 80 mates with/abuts against at least part of the inner wall of the other one of the end sections of the clamping opening 81.

Owing to those corresponding/complementary shapes, the insert part 83 may be positioned directly against either one of the end sections. Likewise the steerer tube 80 may be positioned directly against either one of the end sections and against the insert part 83.

It is noted that other cross-sectional shapes of the steerer tube, and in particular the variant for the steerer tube with the flattened opposing side walls as shown in fig. 13, can also be used in combination with clamping organs having cooperating wedge segments in one of their insert parts, as for example shown in fig. 2-11.

Besides the embodiments shown numerous variants are possible. For example the shapes and dimensions of the various parts can be changed. The clamping organs preferably are made out of a (reinforced) plastic but can also be made out of an Aluminum alloy or another metal. The stem body preferably is made out of (carbon-)reinforced)) plastic but also can be made out of an Aluminum alloy or another metal. If desired the combined length-adjustment/clamping option can further be combined with an angle-adjustment feature if desired. Instead of having a distinctive handlebars clamped by the stem body, it is also possible to make at least part of the handlebar integral with the stem body. It is also possible to close a top side of the stem body there where the steerer tube is clamped. It is also possible to have a lower part of the clamping opening where the steerer tube gets clamped, be shaped different than an upper part of the clamping opening. The lower part of the clamping opening then for example still may have the shown race track shape or other suitable shape, whereas the upper part above the area where the steerer tube is clamped may be a different shape. Instead of using a stem body which at its front end is designed to clamp a handlebar, it is also possible to use an integral assembly of a stem body and handlebar. Then the inventive stem-length adjustability option even gets to be more important in order to be cost-effective. The upper wall of the clamping organs can have all kinds of shapes and if desired even can be dimensioned equal to or smaller than the clamping opening such that it is able to at least partly enter the clamping opening.

Thus according to the invention an assembly of a stem body and clamping organs is provided with which it has become possible to make length-adjustments in an easy, quick and flexible manner without having to use large numbers of manufacturing moulds for producing all kinds of different lengths of stem bodies. The clamping organs advantageously not only make it possible to quickly and easily adjust the length but in addition also may help to protect the fork steerer tube from the clamping loads, which particularly may be important when the fork steerer tube is made out of carbon-fibre or the like.

## Claims

1. Assembly of a bicycle stem and one or more clamping organs, comprising:
- a stem body (1) for extending in a longitudinal direction (x) between a steerer tube (25) and a handlebar;
- a clamping opening (2) in an end part of the stem body (1), which clamping opening (2) is designed for having an upper end of the steerer tube (25) placed therein in an insertion direction (y); and
- at least one clamping organ (10, 30) for clamping the steerer tube (25) inside the clamping opening (2),
in which the clamping organ (10, 30) has at least one insert part (12, 32) that is destined to lie with an inner clamping face (19, 34) against the steerer tube (25) and with an outer clamping face (18, 33) against the clamping opening (2),
in which the clamping opening (2) is dimensioned for having the upper end of the steerer tube (25) and the at least one insert part (12, 32) of the clamping organ (10) fit inside it behind each other in said longitudinal direction (x),
in which the clamping opening (2) has symmetric opposing end sections (3, 4),
**characterized in that,**
both the opposing end sections (3, 4) as well as the inner and outer clamping faces (18, 19, 33, 34) of the at least one insert part (12, 32) of the clamping organ (10, 30) are shaped complementary to outer circumferential parts of the upper end of the steerer tube (25), such that the at least one insert part (12, 32) of the clamping organ (10, 30) is positionable in two different rotational positions on either side of the steerer tube (25) inside the clamping opening (2) for adjusting a distance between the steerer tube (25) and the handlebar.

2. Assembly according to claim 1, wherein the clamping organ (10) is of a first type in which it comprises only one insert part (12) that is dimensioned to substantially fill up one of the end sections (3, 4) of the clamping opening (2) adjacent the upper end of the steerer tube (25) in a clamping position.

3. Assembly according to claim 1, wherein the clamping organ (30) is of a second type in which it comprises a first and second insert part (12, 32) that lie interspaced from each other such that the upper end of the steerer tube (25) fits in between them, wherein the first and second insert parts (12, 32) are both destined to lie with an inner clamping face (19, 34) against the steerer tube (25) and with an outer clamping face (18, 33) against one of the end sections (3, 4) of the clamping opening (2), and wherein the first and second insert parts (12, 32) are dimensioned to substantially fill up different sizes of the end sections (3, 4) of the clamping opening (2) adjacent the upper end of the steerer tube (25) in a clamping position.

4. Assembly according to claim 3, wherein a set of second type clamping organs (30) is provided of which the respective first and second insert parts (12, 32) are designed with different ratios for substantially filling up the respective end sections (3, 4) of the clamping opening (2) to a larger or lesser amount adjacent the upper end of the steerer tube (25) in the clamping position.

5. Assembly according to claim 2 and 3 or 4, wherein a set of first and second type clamping organs (10, 30) is provided.

6. Assembly according to one of the preceding claims, wherein the first and/or second insert part (12, 32) comprises cooperating wedge segments (12a, 12b) that are slidable along each other and a tightening element (14) for pulling the wedge segments (12a, 12b) towards each other in the insertion direction (y) while having them slide along each other and exert the clamping forces between the steerer tube (25) and the clamping opening (2).

7. Assembly according to one of the preceding claims, wherein the clamping organ (10, 30) comprises an upper wall (11) that covers at least part of an upper side of the clamping opening (2) while resting with a circumferential edge (23) upon the stem body (1), and which upper wall (11) connects to the at least one insert part (12, 32).

8. Assembly according to claim 7, wherein the upper wall (11) comprises an opening (24) for the upper end of the steerer tube (25) to project through.

9. Assembly according to claim 7, wherein the upper wall (11) substantially covers the upper end of the steerer tube (25).

10. Assembly according to one of the preceding claims, wherein the steerer tube (25) has a cylindrical cross section, wherein the inner and outer clamping faces (18, 19, 33, 34) of the at least one insert part (12, 32) of the clamping organ (10, 30) are semi-cylindrical, and wherein the clamping opening (2) has an oblong race track shape with two semi-cylindrical end sections (3, 4) with straight sections extending therebetween.

11. Assembly according to one of the preceding claims, further comprising a steerer tube (25).

12. Bicycle comprising a steerer tube (25) and an assembly of a bicycle stem and one or more clamping organs according to one of the preceding claims, wherein the stem body (1) is clamped to the steerer tube (25) with the aid of a clamping organ (10, 30) out of the assembly.

## Patentansprüche

1. Anordnung eines Fahrradvorbaus und eines oder mehrerer Klemmteile, umfassend:
- einen Vorbaukörper (1), der sich in Längsrichtung (x) zwischen einem Steuerrohr (25) und einem Lenker erstreckt;
- eine Klemmöffnung (2) in einem Endteil des Vorbaukörpers (1), wobei die Klemmöffnung (2) dafür ausgelegt ist, dass ein oberes Ende des Steuerrohres (25) in eine Einsetz-Richtung (y) darin angeordnet ist; und
- mindestens ein Klemmteil (10, 30) zum Klemmen des Steuerrohres (25) innerhalb der Klemmöffnung (2), wobei das Klemmteil (10, 30) mindestens ein Einsatzteil (12, 32) aufweist, das dazu bestimmt ist, mit einer inneren Klemmfläche (19, 34) gegen das Steuerrohr (25) und mit einer äußeren Klemmfläche (18, 33) gegen die Klemmöffnung (2) zu liegen,
wobei die Klemmöffnung (2) so dimensioniert ist, dass das obere Ende des Steuerrohres (25) und das mindestens eine Einsatzteil (12, 32) des Klemmteils (10) in dieses hintereinander in diese Längsrichtung (x) passen,
wobei die Klemmöffnung (2) symmetrische gegenüberliegende Endabschnitte (3, 4) aufweist,
**dadurch gekennzeichnet, dass,**
sowohl die gegenüberliegenden Endabschnitte (3, 4) als auch die inneren und äußeren Klemmflächen (18, 19, 33, 34) des mindestens einen Einsatzteils (12, 32) des Klemmteils (10, 30) komplementär zu den äußeren Umfangsteilen des oberen Endes des Steuerrohres (25) geformt sind, so dass das mindestens eine Einsatzteil (12, 32) des Klemmteils (10, 30) in zwei verschiedenen Drehpositionen auf beiden Seiten des Steuerrohres (25) innerhalb der Klemmöffnung (2) zum Einstellen eines Abstandes zwischen dem Steuerrohr (25) und dem Lenker positionierbar ist.

2. Anordnung nach Anspruch 1, wobei das Klemmteil (10) von einem ersten Typ ist, bei dem es nur ein Einsatzteil (12) umfasst, das so bemessen ist, dass es einen der Endabschnitte (3, 4) der Klemmöffnung (2) neben dem oberen Ende des Steuerrohres (25) in einer Klemmposition im Wesentlichen ausfüllt.

3. Anordnung nach Anspruch 1, wobei das Klemmteil (30) von einem zweiten Typ ist, bei dem es ein erstes und ein zweites Einsatzteil (12, 32) umfasst, die so voneinander beabstandet liegen, dass das obere Ende des Steuerrohres (25) zwischen sie passt, wobei das erste und das zweite Einsatzteil (12, 32) beide dazu bestimmt sind, mit einer inneren Klemmfläche (19, 34) gegen das Steuerrohr (25) und mit einer äußeren Klemmfläche (18, 33) gegen einen der Endabschnitte (3, 4) der Klemmöffnung (2) zu liegen, und wobei das erste und das zweite Einsatzteil (12, 32) so bemessen sind, dass sie im Wesentlichen unterschiedliche Größen der Endabschnitte (3, 4) der Klemmöffnung (2) neben dem oberen Ende des Steuerrohres (25) in einer Klemmposition ausfüllen.

4. Anordnung nach Anspruch 3, wobei ein Satz von Klemmteilen (30) vom zweiten Typ vorgesehen ist, von denen die jeweiligen ersten und zweiten Einsatzteile (12, 32) mit unterschiedlichen Verhältnissen geformt sind, um die jeweiligen Endabschnitte (3, 4) der Klemmöffnung (2) in der Klemmstellung neben dem oberen Ende des Steuerrohres (25) zu einem größeren oder einem kleineren Teil zu füllen.

5. Anordnung nach Anspruch 2 und 3 oder 4, wobei ein Satz von ersten und zweiten Klemmteilen (10, 30) vorgesehen ist.

6. Anordnung nach einem der vorstehenden Ansprüche, wobei das erste und/oder zweite Einsatzteil (12, 32) zusammenwirkende Keilsegmente (12a, 12b), die einander entlang verschiebbar sind, und ein Verengungselement (14) zum Ziehen der Keilsegmente (12a, 12b) zueinander in die Einsetz-Richtung (y) während sie einander entlang gleiten und die Klemmkräfte zwischen dem Steuerrohr (25) und der Klemmöffnung (2) ausüben, umfassen.

7. Anordnung nach einem der vorstehenden Ansprüche, wobei das Klemmteil (10, 30) eine obere Wand (11) umfasst, die zumindest einen Teil einer Oberseite der Klemmöffnung (2) abdeckt während sie mit einer Umfangskante (23) auf dem Vorbaukörper (1) aufliegt, und die obere Wand (11) das zumindest eine Einsatzteil (12, 32) verbindet.

8. Anordnung nach Anspruch 7, wobei die obere Wand (11) eine Öffnung (24) für das obere Ende des Steuerrohres (25) zum Durchragen aufweist.

9. Anordnung nach Anspruch 7, wobei die obere Wand (11) im Wesentlichen das obere Ende des Steuerrohres (25) abdeckt.

10. Anordnung nach einem der vorstehenden Ansprüche, wobei das Steuerrohr (25) einen zylindrischen Querschnitt aufweist, wobei die inneren und äußeren Klemmflächen (18, 19, 33, 34) des mindestens einen Einsatzteils (12, 32) des Klemmteils (10, 30) halbzylindrisch sind, und wobei die Klemmöffnung (2) eine längliche Rennbahnform mit zwei halbzylindrischen Endabschnitten (3, 4) mit dazwischen verlaufenden geraden Abschnitten aufweist.

11. Anordnung nach einem der vorstehenden Ansprüche, ferner umfassend ein Steuerrohr (25).

12. Fahrrad umfassend ein Steuerrohr (25) und eine Anordnung eines Fahrradvorbaus und eines oder mehreren Klemmteilen nach einem der vorstehenden Ansprüche, wobei der Vorbaukörper (1) mit Hilfe eines Klemmteils (10, 30) aus der Anordnung an das Steuerrohr (25) geklemmt ist.

## Revendications

1. Assemblage d'une potence de bicyclette et d'un ou plusieurs organes de serrage comprenant :
un corps de potence (1) pour s'étendre dans une direction longitudinale (x) entre un pivot de fourche (25) et un guidon ;
une ouverture de serrage (2) dans une partie d'extrémité du corps de potence (1), laquelle ouverture de serrage (2) est conçue pour avoir une extrémité supérieure du pivot de fourche (25) placée à l'intérieur de cette dernière dans une direction d'insertion (y) ; et
au moins un organe de serrage (10, 30) pour serrer le pivot de fourche (25) à l'intérieur de l'ouverture de serrage (2),
dans lequel l'organe de serrage (10, 30) a au moins une partie d'insert (12, 32) qui est destinée à s'étendre avec une face de serrage interne (19, 34) contre le pivot de fourche (25) et avec une face de serrage externe (18, 33) contre l'ouverture de serrage (2),
dans lequel l'ouverture de serrage (2) est dimensionnée pour avoir l'extrémité supérieure du pivot de fourche (25) et la au moins une partie d'insert (12, 32) de l'organe de serrage (10) qui s'adaptent à l'intérieur de cette dernière, l'une derrière l'autre dans ladite direction longitudinale (x),
dans lequel l'ouverture de serrage (2) a des sections d'extrémité opposées symétriques (3, 4),
**caractérisé en ce que :**
les deux sections d'extrémité (3, 4) opposées ainsi que les faces de serrage interne et externe (18, 19, 33, 34) de la au moins une partie d'insert (12, 32) de l'organe de serrage (10, 30) sont formées de manière complémentaire par rapport aux parties circonférentielles externes de l'extrémité supérieure du pivot de fourche (25), de sorte que la au moins une partie d'insert (12, 32) de l'organe de serrage (10, 30) peut être positionnée dans deux positions de rotation différentes de chaque côté du pivot de fourche (25) à l'intérieur de l'ouverture de serrage (2) pour ajuster une distance entre le pivot de fourche (25) et le guidon.

2. Assemblage selon la revendication 1, dans lequel l'organe de serrage (10) est d'un premier type dans lequel il ne comprend qu'une partie d'insert (12) qui est dimensionnée sensiblement pour remplir l'une des sections d'extrémité (3, 4) de l'ouverture de serrage (2) adjacente à l'extrémité supérieure du pivot de fourche (25) dans une position de serrage.

3. Assemblage selon la revendication 1, dans lequel l'organe de serrage (30) est d'un second type dans lequel il comprend une première et une seconde partie d'insert (12, 32) qui sont espacées l'une de l'autre de sorte que l'extrémité supérieure du pivot de fourche (25) s'adapte entre elles, dans lequel les première et seconde parties d'insert (12, 32) sont toutes deux destinées à s'étendre avec une face de serrage interne (19, 34) contre le pivot de fourche (25) et avec une face de serrage externe (18, 33) contre l'une des sections d'extrémité (3, 4) de l'ouverture de serrage (2) et dans lequel les première et seconde parties d'insert (12, 32) sont dimensionnées pour remplir sensiblement différentes tailles des sections d'extrémité (3, 4) de l'ouverture de serrage (2) adjacentes à l'extrémité supérieure du pivot de fourche (25) dans une position de serrage.

4. Assemblage selon la revendication 3, dans lequel on prévoit un ensemble d'organes de serrage de second type (30) dont les première et seconde parties d'insert (12, 32) sont conçues avec différents rapports pour remplir sensiblement les sections d'extrémité (3, 4) respectives de l'ouverture de serrage (2) selon une quantité plus ou moins importante adjacente à l'extrémité supérieure du pivot de fourche (25) dans la position de serrage.

5. Assemblage selon les revendications 2 et 3 ou 4, dans lequel on prévoit un ensemble d'organes de serrage de premier et second types (10, 30).

6. Assemblage selon l'une des revendications précédentes, dans lequel la première et/ou la seconde partie d'insert (12), 32) comprennent des segments de cale (12a, 12b) en coopération qui peuvent coulisser l'un le long de l'autre et un élément de serrage (14) pour tirer les segments de cale (12a, 12b) l'un vers l'autre dans la direction d'insertion (y) tout en les ayant fait coulisser l'un le long de l'autre et exercer les forces de serrage entre le pivot de fourche (25) et l'ouverture de serrage (2) .

7. Assemblage selon l'une des revendications précédentes, dans lequel l'organe de serrage (10, 30) comprend une paroi supérieure (11) qui recouvre au moins une partie d'un côté supérieur de l'ouverture de serrage (2) tout en s'appuyant avec un bord circonférentiel (23) sur le corps de potence (1), et laquelle paroi supérieure (11) se raccorde à la au moins une partie d'insert (12, 32).

8. Assemblage selon la revendication 7, dans lequel la paroi supérieure (11) comprend une ouverture (24) pour que l'extrémité supérieure du pivot de fourche (25) fasse saillie à travers cette dernière.

9. Assemblage selon la revendication 7, dans lequel la paroi supérieure (11) recouvre sensiblement l'extrémité supérieure du pivot de fourche (25).

10. Assemblage selon l'une quelconque des revendications précédentes, dans lequel le pivot de fourche (25) a une section transversale cylindrique, dans lequel les faces de serrage interne et externe (18, 19, 33, 34) de la au moins une partie d'insert (12, 32) de l'organe de serrage (10, 30) sont semi-cylindriques, et dans lequel l'ouverture de serrage (2) a une forme de circuit oblongue avec deux sections d'extrémité (3, 4) semi-cylindriques avec des sections droites qui s'étendent entre elles.

11. Assemblage selon l'une des revendications précédentes, comprenant en outre un pivot de fourche (25).

12. Bicyclette comprenant un pivot de fourche (25) et un assemblage d'une potence de bicyclette et d'un ou plusieurs organes de serrage selon l'une des revendications précédentes, dans laquelle le corps de potence (1) est serré sur le pivot de fourche (25) à l'aide d'un organe de serrage (10, 30) hors de l'assemblage.
